(19)

Europäisches
Patentamt
European
Patent Office
Office européen
des brevets

(11) **EP 4 763 893 A1**

(12) **EUROPEAN PATENT APPLICATION**
published in accordance with Art. 153(4) EPC

(43) Date of publication:
**24.06.2026  Bulletin 2026/26**

(21) Application number: 24872638.2

(22) Date of filing: 02.05.2024

(51) International Patent Classification (IPC):
*C08J 5/18* (2006.01)        *C08L 77/00* (2006.01)
*C08L 71/00* (2006.01)       *C08L 29/14* (2006.01)
*C08L 29/04* (2006.01)       *C08J 7/04* (2020.01)

(52) Cooperative Patent Classification (CPC):
C08J 5/18; C08J 7/04; C08L 29/04; C08L 29/14;
C08L 71/00; C08L 77/00

(86) International application number:
**PCT/KR2024/005964**

(87) International publication number:
**WO 2025/070924 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  26.09.2023  KR 20230129042
26.09.2023  KR 20230129043

(71) Applicant: **Microworks Co., Ltd.**
**Jincheon-gun, Chungcheonbuk-do 27818 (KR)**

(72) Inventors:
• JANG, Kwangho
Suwon-si, Gyeonggi-do 16336 (KR)
• CHUNG, Sungjin
Suwon-si, Gyeonggi-do 16336 (KR)
• HAN, Kweonhyung
Suwon-si, Gyeonggi-do 16336 (KR)

(74) Representative: **BCKIP Part mbB**
**Landsberger Straße 98**
**80339 München (DE)**

(54)    **FILM**

(57)    A film according to embodiments comprises a first polymer resin and a second polymer resin that are heterogeneous from each other, wherein the first polymer resin comprises polyamide-based repeating units and polyether-based repeating units, wherein the second polymer resin comprises, in a branch, any one selected from the group consisting of a hydroxyl group, an acetal group, and combinations thereof, wherein a tensile recovery rate at an N% elongation is derived according to Equation 1 below, and wherein, when the N% is 60%, the tensile recovery rate of the film is 90% or more.

[Equation 1]

$$\text{Tensile recovery rate } (\%) = (LfN - LiN) / (LfN - Li)$$

wherein, in Equation 1, LfN is a length of the film elongated to an N% elongation, LiN is a length of the film after recovery from the elongated state, and Li is a length of the film before elongation.

The film according to the embodiments may maintain excellent optical properties and excellent mechanical properties over a relatively long period of time.

EP 4 763 893 A1

**Description**

[Technical Field]

The present embodiments relate to a film having excellent mechanical properties.

(Cross-Reference to Related Applications)

This application claims priority to Korean Patent Application No. 10-2023-0129043, filed on September 26, 2023, and Korean Patent Application No. 10-2023-0129042, filed on September 26, 2023, the entire contents of which are incorporated herein by reference.

[Background Art]

In order to protect painted coating surfaces applied to automobile exteriors and the like, film laminates containing materials such as polyurethane (TPU) and polyvinyl chloride (PVC) have conventionally been attached. However, such film laminates of polyurethane, polyvinyl chloride, or the like exhibit significant changes in elastic properties depending on external environmental conditions, particularly temperature variations, during attachment to painted coating surfaces, thereby causing obstacles to installation work. In winter, although the work is performed while separately controlling the temperature of the working area by providing indoor air-conditioning and localized heating devices, there are still shortcomings in terms of work convenience, completeness, and quality.
The above-described background art constitutes technical information possessed by the inventor for deriving the embodiments or acquired in the course of deriving the embodiments, and does not necessarily constitute publicly known prior art that was disclosed to the general public before the filing of the present invention.
As related prior art, there is Korean Patent Laid-Open Publication No. 10-2012-0022141, entitled "Release Film for Automobile Paint Protection Film", and the like.

[Detailed Description of the Invention]

[Technical Problem]

An object of the embodiments is to provide a film having excellent mechanical properties such as tensile recovery rate and strain.

[Technical Solution]

In order to achieve the above object, one or more embodiments provide a film comprising a first polymer resin and a second polymer resin that are heterogeneous resins, wherein the first polymer resin comprises polyamide-based repeating units and polyether-based repeating units, and wherein the second polymer resin comprises, in a branch, any one selected from the group consisting of a hydroxyl group, an acetal group, and combinations thereof.
A tensile recovery rate at an N% elongation is derived according to Equation 1 below, and when the N% is 60%, the tensile recovery rate of the film may be 90% or more.

$$[\text{Equation 1}]$$

$$\text{Tensile recovery rate }(\%) = (LfN - LiN) / (LfN - Li)$$

In Equation 1, LfN is a length of the film elongated to an N% elongation, LiN is a length of the film after recovery from the elongated state, and Li is a length of the film before elongation.
The film may have a stress of 1 N/mm$^2$ or less when the strain is 100%.
The film may have a haze value of 3% or less after being left at 60 °C for 7 days.
The film may have a tensile recovery rate of 75% or more when the N% is 100%.
The film may comprise 10 wt% or more of the polyether-based repeating units based on a total sum of the first polymer resin and the second polymer resin.
A tensile recovery rate reduction coefficient (20-40) between a 20% elongation and a 40% elongation is derived according to Equation 2 below, and the tensile recovery rate reduction coefficient (20-40) of the film may be 0.3 or less.

[Equation 2]

$$\text{Tensile recovery rate reduction coefficient } (20\text{–}40) = \left| \frac{(A_{40} - A_{20})}{(40-20)} \right|$$

In Equation 2, $A_{20}$ is a tensile recovery rate (%) of the film at a 20% elongation, and $A_{40}$ is a tensile recovery rate (%) of the film at a 40% elongation.

In order to achieve the above object, one or more embodiments comprise a polyether block amide copolymer resin and a polyvinyl acetal resin, and the stress may be 7 N/mm$^2$ or less when the strain is 20%.

The film may have a value of 5 N/mm$^2$ or less, which is obtained by subtracting the stress at a strain of 20% from the stress at a strain of 100%.

The film may have a ratio of the stress at a strain of 300% to the stress at a strain of 100% of 1.4 or more.

The film may be a paint protection film.

[Effects of the Invention]

The film according to the embodiments may maintain excellent optical properties and excellent mechanical properties over a relatively long period of time. However, the effects of the embodiments are not limited to the effects described above, and other effects not mentioned above will be clearly understood by those skilled in the art from the following description.

[Mode for Carrying Out the Invention]

Hereinafter, embodiments will be described in detail so that a person having ordinary skill in the art to which the embodiments pertain may easily carry out the invention. However, the embodiments may be implemented in various different forms and are not limited to the embodiments described herein.

In the specification, when a certain component is described as "comprising" another component, unless otherwise stated, this does not exclude other components, and additional components may be further comprised.

In the specification, when a certain component is described as being "connected" to another component, this includes not only a case in which the components are directly connected to each other, but also a case in which the components are connected with another component interposed therebetween.

In the specification, the expression that B is disposed on A means that B is disposed in direct contact with A or that B is disposed on A with another component interposed therebetween, and is not limited to an interpretation in which B is disposed in direct contact with a surface of A.

In the specification, the term "combinations thereof" included in a Markush-type expression means one or more mixtures or combinations selected from a group consisting of the components described in the Markush-type expression, and means that one or more selected from the group consisting of the components are comprised.

In the specification, the expression "A and/or B" means "A, B, or A and B".

In the specification, terms such as "first", "second", or "A", "B" are used to distinguish the same terms from each other unless otherwise specified.

In the specification, singular expressions are construed to include singular or plural meanings as interpreted in context, unless otherwise specified.

In the specification, room temperature refers to approximately 20 °C, and normal temperature refers to approximately 25 °C.

In the specification, letters and/or numbers written together with a compound name mean abbreviations for the compound name.

In the specification, a resin described herein is construed to include the resin itself and compounds derived from the resin. For example, a polyether block amide copolymer resin described herein means a polyether block amide copolymer resin and derivatives thereof.

In the specification, evaluation of a hydroxyl group content was performed by measuring an amount of ethylene groups to which hydroxyl groups of the polyvinyl acetal resin are bonded, according to a method conforming to JIS K6728.

In order to achieve the above object, a film according to the embodiments comprises a first polymer resin and a second polymer resin that are heterogeneous resins

The first polymer resin comprises polyamide-based repeating units and polyether-based repeating units.

The second polymer resin comprises, in a branch, any one selected from the group consisting of a hydroxyl group, an acetal group, and combinations thereof.

The first polymer resin comprising the polyamide-based repeating units and the polyether-based repeating units may impart excellent durability, dimensional stability, and the like to the film.

A surface protection film often involves an elongation process when the film is applied to a target object. A surface of the target object to be protected may include curved surfaces or bent surfaces, and a film attached to such portions inevitably undergoes partial elongation of the film.

When a first polymer resin to be described later is applied in the form of a film, a phenomenon may be observed in which the film loses elasticity and fails to recover to its original length as the elongation rate increases.

When the tensile recovery rate of the film is reduced, the appearance of the target object to which the film is applied may be deteriorated, and spaces such as air bubbles may be formed between the target object and the film, making it difficult to sufficiently protect the target object from the outside.

In order to suppress such a reduction in tensile recovery rate, the inventors have applied various methods, and as a result, confirmed that the reduction in tensile recovery rate can be substantially suppressed by forming a film through mixing heterogeneous resins as in the embodiments.

Hereinafter, the embodiments will be described in more detail.

Composition of Film

In order to achieve the above object, a film according to the embodiments comprises a first polymer resin and a second polymer resin.

The first polymer resin comprises amide-based repeating units and polyether-based repeating units.

In the first polymer resin, the amide-based repeating units may contribute to improvement of hardness of the film. In the first polymer resin, the ester-based repeating units may help impart flexibility and elasticity to the film.

The first polymer resin may comprise the amide-based repeating units in an amount of 80 wt% or less. The first polymer resin may comprise the amide-based repeating units in an amount of 70 wt% or less. The first polymer resin may comprise the amide-based repeating units in an amount of 60 wt% or less. The first polymer resin may comprise the amide-based repeating units in an amount of 50 wt% or less. The first polymer resin may comprise the amide-based repeating units in an amount of 40 wt% or less. The first polymer resin may comprise the amide-based repeating units in an amount of 30 wt% or less. The first polymer resin may comprise the amide-based repeating units in an amount of 0 wt% or more, and may comprise the amide-based repeating units in an amount of 10 wt% or more.

The amide-based repeating units may comprise amide residues.

The first polymer resin may comprise the amide residues in an amount of 80 wt% or less, 70 wt% or less, 60 wt% or less, 50 wt% or less, 40 wt% or less, or 30 wt% or less. In addition, the first polymer resin may comprise the amide residues in an amount of 0 wt% or more or 10 wt% or more.

The amide residues may be, for example, aliphatic amide residues, semi-aromatic amide residues, semi-crystalline polyamide residues, amorphous polyamide residues, or mixtures thereof.

The first polymer resin may comprise a total amount of aliphatic amide residues, semi-aromatic amide residues, semi-crystalline polyamide residues, and amorphous polyamide residues in an amount of 80 wt% or less, 70 wt% or less, 60 wt% or less, 50 wt% or less, 40 wt% or less, or 30 wt% or less. In addition, the first polymer resin may comprise the total amount of aliphatic amide residues, semi-aromatic amide residues, semi-crystalline polyamide residues, and amorphous polyamide residues in an amount of 0 wt% or more or 10 wt% or more.

The aliphatic amide residues may be, for example, residues of polycaprolactam (PA 6), polyundecanamide (PA 11), poly-lauryllactam (PA 12), polybutylene adipamide (PA 46), polyhexamethylene adipamide (PA 66), polyhexamethylene azelamide (PA 69), polyhexamethylene sebacamide (PA 610), polyhexamethylene dodecanediamide (PA 612), polydecamethylene dodecanediamide (PA 1012), polydecamethylene sebacamide (PA 1010), polydodecamethylene dodecanediamide (PA 1212), polyamide copolymer residues such as PA 11/NHUA, PA BACM6, PA BACM10, PA BACM12, PA 6/66, or PA 6/12.

The semi-aromatic amide residues may be residues of PA 6/6T, PA 66/6T, PA 6T/6I, PA 66/6T/6I, PA 11/6T, PA 12/6T, PA MXD6, or PA MXD10.

The semi-crystalline polyamide residues may be PA 6 residues, PA 11 residues, PA 12 residues, PA 10.10 residues, PA 10.12 residues, PA 6.10 residues, or PA 6.12 residues.

The amorphous polyamide residues may be polyamides such as polyhexamethylene isophthalamide (PA 6I) residues, polytrimethylhexamethylene terephthalamide (PA TMHMDAT) residues, or PA BACM12 residues; or amide copolymers such as PA 6/BMACPI residues, PA 6/BAMNT residues, PA 11/BMACMI residues, PA 11/BMACMT/BMACMI residues, PA 11/BACM.I/IPDA.I residues, PA 12/BMACM.I residues, PA 12/BACMT/BACMI residues, PA 12/BMACMT/-BACMI residues, PA 12/BACMI/IPDAI residues, PA 6T/6I/BACMI residues, or PA 6T/6I/BACMT/BACMI residues.

The first polymer resin may comprise the polyether-based repeating units in an amount of 10 wt% or more, 15 wt% or more, 20 wt% or more, 25 wt% or more, 30 wt% or more, or 35 wt% or more, based on a total sum of the first polymer resin and the second polymer resin. The first polymer resin may comprise the polyether-based repeating units in an amount of 50 wt% or less or 45 wt% or less, based on the total sum of the first polymer resin and the second polymer resin.

The polyether-based repeating units may comprise tetramethylene oxide residues, ethylene oxide residues, and/or propylene oxide residues.

The first polymer resin may comprise a total amount of the tetramethylene oxide residues, ethylene oxide residues, and propylene oxide residues in an amount of 20 wt% or more, 30 wt% or more, 40 wt% or more, 50 wt% or more, 60 wt% or more, or 70 wt% or more. The first polymer resin may comprise the total amount of the tetramethylene oxide residues, ethylene oxide residues, and propylene oxide residues in an amount of 100 wt% or less or 90 wt% or less.

For example, the polyether-based repeating units may comprise $-CH_2-CH_2-CH_2-CH_2-O-$, $-CH_2-CH_2-O-$, and/or $-CH_2(-CH_2)-CH_2-O-$.

The first polymer resin may comprise a total amount of $-CH_2-CH_2-CH_2-CH_2-O-$, $-CH_2-CH_2-O-$, and $-CH_2(-CH_2)-CH_2-O-$ in an amount of 20 wt% or more, 30 wt% or more, 40 wt% or more, 50 wt% or more, or 70 wt% or more. The first polymer resin may comprise the total amount of $-CH_2-CH_2-CH_2-CH_2-O-$, $-CH_2-CH_2-O-$, and $-CH_2(-CH_2)-CH_2-O-$ in an amount of 100 wt% or less or 90 wt% or less.

The first polymer resin may be a polyether block amide resin. When the first polymer resin is a polyether block amide resin, a content of tetramethylene oxide residues, ethylene oxide residues, and/or propylene oxide residues comprised in the resin may be less than 40 wt%, less than 30 wt%, or less than 20 wt%, based on the entire resin. In this case, flexibility and elasticity may be imparted to a polyester film comprising the first polymer resin.

The first polymer resin may be, for example, a polyether ester copolymer layer. The first polymer resin may be a polyether ester copolymer resin.

The first polymer resin may be, for example, PEBAX® 25R53, PEBAX® 35R53, PEBAX® 40R53, PEBAX® 55R53, PEBAX® 72R53, PEBAX® Clear1200, Rilsan® BESNO, manufactured by Arkema France, or equivalent products thereof.

The second polymer resin comprises, in a branch, any one selected from the group consisting of a hydroxyl group, an acetyl group, and combinations thereof.

Specifically, the second polymer resin may be a polyvinyl alcohol resin or a polyvinyl acetal resin. The polyvinyl acetal resin may be obtained by reacting polyvinyl alcohol and an aldehyde.

The second polymer resin may have a degree of polymerization of 3,500 or less.

When the second polymer resin has a relatively low degree of polymerization, it may be applied to formation of a coating film, and when the degree of polymerization is equal to or greater than a certain level, it may be applied to film formation by methods such as extrusion.

In the embodiments, the first polymer resin and the second polymer resin are applied in a mixed manner, and both grades may be applied.

For example, the second polymer resin may be a polyvinyl alcohol resin having a degree of polymerization of 200 to 3,500. Alternatively, the second polymer resin may be a polyvinyl acetal resin obtained by acetalizing a polyvinyl alcohol resin having a degree of polymerization of 200 to 3,500 with an aldehyde.

For example, the second polymer resin may be a polyvinyl alcohol resin having a degree of polymerization of 1,600 to 3,000. Alternatively, the second polymer resin may be a polyvinyl acetal resin obtained by acetalizing a polyvinyl alcohol resin having a degree of polymerization of 1,600 to 3,000 with an aldehyde.

For example, the second polymer resin may be a polyvinyl alcohol resin having a degree of polymerization of 1,700 to 2,500. Alternatively, the second polymer resin may be a polyvinyl acetal resin obtained by acetalizing a polyvinyl alcohol resin having a degree of polymerization of 1,700 to 2,500 with an aldehyde.

When such a second polymer resin is applied, mechanical properties of the film may be sufficiently improved.

The aldehyde may be any one selected from the group consisting of n-butyl aldehyde, isobutyl aldehyde, n-valeraldehyde, 2-ethylbutyl aldehyde, n-hexyl aldehyde, and blends thereof. When n-butyl aldehyde is applied as the aldehyde, a produced polyvinyl butyral resin may have excellent optical properties.

The second polymer resin comprises a hydroxyl group.

A hydroxyl group content of the second polymer resin may be 2 wt% or more, 5 wt% or more, 8 wt% or more, 10 wt% or more, 15 wt% or more, 16 wt% or more, or 19 wt% or more. In addition, the hydroxyl group content of the second polymer resin may be 60 wt% or less, 50 wt% or less, 40 wt% or less, or 30 wt% or less.

The second polymer resin may have an acetyl group content of 0.01 wt% or more, 1.5 wt% or more, 3 wt% or more, 5 wt% or more, or 10 wt% or more. In addition, the second polymer resin may have an acetyl group content of 20 wt% or less, 15 wt% or less, or 12 wt% or less.

When the second polymer resin having such characteristics is applied, compatibility with a plasticizer to be described later may be enhanced, and degradation of optical performance of the film due to haze change may be effectively suppressed. This is considered to be because hydroxyl groups disposed in branches help suppress migration of unreacted polyether monomers (or oligomers), thereby suppressing haze variation.

In addition, when the second polymer resin having such characteristics is applied, flexibility and elasticity may be imparted to the first polymer resin, thereby effectively suppressing a reduction in tensile recovery rate of the film due to elongation.

The film may further comprise a plasticizer. The plasticizer may be comprised in an amount of 0.5 parts by weight or less based on 1 part by weight of the second polymer resin.

The plasticizer may be comprised in an amount of 0.01 parts by weight or more, 0.05 parts by weight or more, 0.08 parts by weight or more, 0.1 parts by weight or more, 0.12 parts by weight or more, or 0.15 parts by weight or more, based on 1 part by weight of the second polymer resin. In addition, the plasticizer may be comprised in an amount of 0.5 parts by weight or less, 0.4 parts by weight or less, 0.35 parts by weight or less, or 0.3 parts by weight or less, based on 1 part by weight of the second polymer resin.

The film comprises a plasticizer in the amounts described below based on 100 parts by weight of a base resin comprising the first polymer resin and the second polymer resin.

Based on 100 parts by weight of the base resin, the plasticizer may be comprised in an amount of 0.1 parts by weight or more, 0.3 parts by weight or more, 0.5 parts by weight or more, or 1 part by weight or more. In addition, based on 100 parts by weight of the base resin, the plasticizer may be comprised in an amount of 20 parts by weight or less, 17 parts by weight or less, 15 parts by weight or less, or 10 parts by weight or less.

Specifically, the plasticizer may be any one selected from the group consisting of triethylene glycol bis(2-ethylhexanoate) (3G8), tetraethylene glycol diheptanoate (4G7), triethylene glycol bis(2-ethylbutyrate) (3GH), triethylene glycol bis(2-heptanoate) (3G7), dibutoxyethoxyethyl adipate (DBEA), butyl carbitol adipate (DBEEA), dibutyl sebacate (DBS), bis(2-hexyl) adipate (DHA), and combinations thereof. More specifically, the plasticizer may comprise any one selected from the group consisting of triethylene glycol di-2-ethylbutyrate, triethylene glycol di-2-ethylhexanoate, triethylene glycol di-n-heptanoate, and combinations thereof. Still more specifically, the plasticizer may be triethylene glycol bis(2-ethylhexanoate) (3G8). Such plasticizers have excellent compatibility with the second polymer resin and may simultaneously improve workability and optical performance.

In order to achieve the above object, a film according to one embodiment of the embodiments comprises a first polymer resin and a second polymer resin that are heterogeneous resins Since detailed descriptions of the first polymer resin and the second polymer resin have been provided above, redundant descriptions thereof will be omitted.

The film may comprise the second polymer resin in an amount of 2.5 parts by weight or less based on 1 part by weight of the first polymer resin. Specifically, the film may comprise the second polymer resin in an amount of 2.5 parts by weight or less, 2.3 parts by weight or less, 2 parts by weight or less, 1.8 parts by weight or less, 1.6 parts by weight or less, 1.5 parts by weight or less, 1 part by weight or less, 0.67 parts by weight or less, or 0.5 parts by weight or less, based on 1 part by weight of the first polymer resin. The film may comprise the second polymer resin in an amount of 0.001 parts by weight or more, 0.01 parts by weight or more, 0.1 parts by weight or more, 0.2 parts by weight or more, or 0.3 parts by weight or more, based on 1 part by weight of the first polymer resin.

When the film is manufactured at such ratios, migration of unreacted polyether monomers (including oligomers) may be minimized. In addition, degradation of optical performance of the film due to haze variation may be effectively suppressed. Further, when the film is manufactured at such ratios, a reduction in tensile recovery rate of the film due to elongation may be effectively suppressed.

The thickness of the film may be 1,000 $\mu$m or less. Specifically, the thickness of the film may be 500 $\mu$m or less, 250 $\mu$m or less, or 150 $\mu$m or less. The thickness of the film may be 1 $\mu$m or more, 10 $\mu$m or more, 20 $\mu$m or more, 30 $\mu$m or more, 40 $\mu$m or more, or 50 $\mu$m or more, or may be 100 $\mu$m or more. When the film is manufactured to have such a thickness, a thin and lightweight film having excellent impact resistance and the like, while exhibiting low haze, may be provided.

Properties of Film

A film according to one or more embodiments may have a tensile recovery rate of 90% or more at a 60% elongation.

A tensile recovery rate at an N% elongation of the film may be derived according to Equation 1 below.

[Equation 1]

$$\text{Tensile recovery rate (\%)} = (LfN - LiN) / (LfN - Li)$$

In Equation 1, LfN is a length of the film elongated to an N% elongation, LiN is a length of the film after recovery from the elongated state, and Li is a length of the film before elongation.

The elongation rate refers to a percentage (%) of a value obtained by dividing a length of the film elongated by applying tension in one direction by a length of the film in the same direction before applying the tension.

By way of example, a method for measuring tensile recovery force will be described. A film sample having a length of 60 mm to 100 mm is prepared, and a length of 50 mm is marked. Thereafter, tension is applied at the predetermined elongation rate described above to elongate the film. That is, the film sample is elongated by applying tension until the length of the film reaches LfN and is maintained for 10 seconds. Thereafter, the tension applied to the elongated film is removed, and the film is left at room temperature for 5 minutes. After the standing period, the marked length of the film is measured, and the measured length is defined as LiN, which is the recovered length of the elongated film.

When the N% is 20%, the tensile recovery rate of the film may be 90% or more, 95% or more, 96% or more, or 97% or more. The tensile recovery rate may be 100% or less or 99% or less.

When the N% is 40%, the tensile recovery rate of the film may be 85% or more, 90% or more, or 95% or more. The tensile recovery rate may be 100% or less or 99% or less.

When the N% is 60%, the tensile recovery rate of the film may be 80% or more, 85% or more, 90% or more, or 93% or more. The tensile recovery rate may be 100% or less or 99% or less.

When the N% is 80%, the tensile recovery rate of the film may be 75% or more, 80% or more, 85% or more, or 90% or more. The tensile recovery rate may be 100% or less or 99% or less.

When the N% is 100%, the tensile recovery rate of the film may be 75% or more, 80% or more, 82% or more, or 84% or more. The tensile recovery rate may be 100% or less or 99% or less.

When the film has such tensile recovery rates, even if operations such as elongating and attaching the film are performed, a degree of plastic deformation occurring in the film may be minimized. In addition, formation of spaces such as air bubbles between an object to which the film is attached and the film may be substantially suppressed.

A tensile recovery rate reduction coefficient (20-40) between a 20% elongation and a 40% elongation may be derived according to Equation 2 below. The coefficient has no unit.

[Equation 2]

$$\text{Tensile recovery rate reduction coefficient } (20–40) = \left| \frac{(A_{40} - A_{20})}{(40-20)} \right|$$

In Equation 2, $A_{20}$ is a tensile recovery rate (%) of the film at a 20% elongation, and $A_{40}$ is a tensile recovery rate (%) of the film at a 40% elongation.

The tensile recovery rate reduction coefficient (20-40) of the film may be 0.3 or less, 0.2 or less, or 0.1 or less. The tensile recovery rate reduction coefficient (20-40) may be 0.01 or more.

A tensile recovery rate reduction coefficient (40-60) between a 40% elongation and a 60% elongation may be derived according to Equation 3 below. The coefficient has no unit.

[Equation 3]

$$\text{Tensile recovery rate reduction coefficient } (40–60) = \left| \frac{(A_{60} - A_{40})}{(60-40)} \right|$$

In Equation 3, $A_{40}$ is a tensile recovery rate (%) of the film at a 40% elongation, and $A_{60}$ is a tensile recovery rate (%) of the film at a 60% elongation.

The tensile recovery rate reduction coefficient (40-60) of the film may be 0.3 or less, 0.2 or less, or 0.1 or less. The tensile recovery rate reduction coefficient (40-60) may be 0.01 or more.

For advantageous application as a surface protection film, it is preferable that the film has high strength and excellent workability.

The strength of the film is related to an effect of protecting a surface of an object from external impacts (for example, stones, door dings, and the like). This is related to stress of the film at a large strain in a stress-strain curve.

In order to smoothly attach the film to a surface of an object including curved surfaces and bent surfaces, it is preferable that deformation is easy in a small strain range to which workability is applied. This is related to stress of the film at a small strain in the stress-strain curve.

In the stress-strain curve, a low strain region refers to a strain region of about 100% or less or about 80% or less.

In the stress-strain curve, a high strain region refers to a strain region of about 200% to about 400%.

The film may have a stress of 7 N/mm² or less, 6.5 N/mm² or less, 6 N/mm² or less, 5.5 N/mm² or less, or 5 N/mm² or less when the strain is 20%. The stress may be 1 N/mm² or more.

The film may have a stress of 8 N/mm² or less, 7.5 N/mm² or less, or 7 N/mm² or less when the strain is 50%. The stress may be 2 N/mm² or more.

The film may have a stress of 6 N/mm² or more, 7 N/mm² or more, 8 N/mm² or more, 9 N/mm² or more, or 10

N/mm$^2$ or more when the strain is 300%. The stress may be 20 N/mm$^2$ or less.

A value obtained by subtracting the stress at a strain of 20% from the stress at a strain of 100% may be 5 N/mm$^2$ or less. The subtracted value may be 5 N/mm$^2$ or less, 4 N/mm$^2$ or less, 3.4 N/mm$^2$ or less, 3 N/mm$^2$ or less, or 2.5 N/mm$^2$ or less. The subtracted value may be 1.2 N/mm$^2$ or more. This means that a change in stress is relatively small in a low strain range, and a film having such characteristics may exhibit excellent workability when applied as a paint protection film or the like.

A ratio of stress at a strain of 20% to stress at a strain of 100% may be 0.45 or more. The ratio may be 0.45 or more, 0.5 or more, or 0.55 or more. The ratio may be 0.85 or less or 0.8 or less. This means that a difference between film stress in a low strain range and stress at a strain of 100% is not large, and a film having such characteristics may exhibit excellent workability.

A ratio of stress at a strain of 300% to stress at a strain of 100% may be 1.4 or more. The ratio may be 1.4 or more, 1.45 or more, or 1.5 or more. The ratio may be 3 or less or 2.2 or less. This indicates that stress at a strain of 300% is significantly greater than stress at a strain of 100%, and when such characteristics are provided, a film having excellent strength may be provided.

A film having such stress values has excellent workability and excellent strength, and thus is highly useful as a surface protection film. Such stress values are considered to be obtained as a result of applying mixing of heterogeneous resins, application of a plasticizer, and the like.

The film may have a haze value of 3% or less at room temperature. Specifically, the film may have a haze value of 2.5% or less or 2% or less at room temperature. The film may have a haze value of 0% or more or 0.1% or more at room temperature. Such a film may secure a level of transparency applicable to an optical film.

The film may have a haze value of 3% or less after being left at 60 °C for 7 days. Specifically, the film may have a haze value of 2.5% or less or 2% or less after being left at 60 °C for 7 days. The film may have a haze value of 0% or more or 0.1% or more after being left at 60 °C for 7 days.

The film may have a haze value difference of 1% or less before and after being left at 60 °C for 7 days. Specifically, the film may have a haze value difference of 0.5% or less, 0.3% or less, 0.1% or less, 0.05% or less, 0.01% or less, or 0.001% or less before and after being left at 60 °C for 7 days. The film may have a haze value difference of 0% or more or 0.0001% or more before and after being left at 60 °C for 7 days.

In this case, even when the film is exposed for a long period of time to a film application work environment at a temperature relatively higher than room temperature, a change in haze value is small, thereby minimizing degradation of optical performance.

Use of Film

The use of the film may be a surface protection film.

The surface protection film may be applied to automobiles, aircraft, electronic products, furniture, and the like (hereinafter, referred to as articles). The articles may include a painted surface on which at least a part of paint or the like is applied. The surface protection film may be attached onto the painted surface and may perform a function of protecting the article so that the paint is not peeled off.

The surface protection film may be disposed on a substrate (object, painted surface). Accordingly, exposure of a surface of the substrate to the outside may be prevented.

A coating layer may be formed on the surface of the substrate. The surface protection film may be disposed on the coating layer. Accordingly, exposure of the coating layer to the outside may be prevented, thereby preventing damage to the coating layer.

An adhesive layer may be additionally provided between the surface of the substrate and the surface protection film. The adhesive layer may be formed on one surface of the surface protection film and attached to the surface of the substrate.

Method for Manufacturing Film

A method for manufacturing a film comprises a preparation operation of preparing a mixture of a film composition comprising a first polymer resin and a second polymer resin; and a forming operation of extruding the mixture to form the mixture into a sheet shape.

Since detailed descriptions of the first polymer resin and the second polymer resin have been provided above, redundant descriptions thereof will be omitted.

The film composition may further comprise a plasticizer.

Since detailed descriptions of the first polymer resin, the second polymer resin, the plasticizer, and contents thereof comprised in the film composition overlap with those described above, detailed descriptions thereof will be omitted.

The mixture is obtained by mixing the first polymer resin and the second polymer resin.

The mixture may be obtained by mixing the first polymer resin with the second polymer resin that has been mixed with a plasticizer.

The second polymer resin may have tacky properties. When the second polymer resin mixed with the plasticizer is mixed with the first polymer resin, compatibility of the composition may be further improved.

The composition may optionally further comprise a light absorber. The light absorber may mitigate degradation of optical properties and mechanical properties of the film due to exposure to ultraviolet light.

The light absorber may comprise any one selected from the group consisting of benzotriazole-based compounds, oxanilide-based compounds, hydroxybenzophenone-based compounds, hydroxyphenyltriazine-based compounds, benzoic acid ester-based compounds, and combinations thereof. Such compounds may exhibit excellent compatibility with a polyether block amide copolymer resin and may effectively absorb ultraviolet light to stably prevent degradation of the film.

For example, Tinuvin® 234, Tinuvin® 312, Tinuvin® 329, Tinuvin® P, Tinuvin® 1130, Tinuvin® 326, Tinuvin® 327, Tinuvin® 328, Tinuvin® 571, Tinuvin® 99-DW, Tinuvin® 1600, and Tinuvin® 1577 manufactured by BASF may be applied as the light absorber.

Based on 100 parts by weight of a total amount of the first polymer resin and the second polymer resin, the composition may comprise the light absorber in an amount of 0.1 parts by weight or more, 0.2 parts by weight or more, 0.35 parts by weight or more, or 0.5 parts by weight or more. The composition may comprise the light absorber in an amount of 5 parts by weight or less, 3 parts by weight or less, or 2 parts by weight or less, based on the total 100 parts by weight. In this case, yellowing and curing rates of the manufactured film may be effectively delayed.

The film may further comprise additives commonly applied in the film field. Examples of the additives include lubricants, anti-blocking agents, thermal stabilizers, antistatic agents, impact modifiers, and the like.

The forming operation is an operation of forming the composition into a sheet shape.

The forming operation may be, for example, an operation in which the mixture is extruded in a molten state and formed into a sheet shape through a T-die.

The forming operation may be, for example, an operation in which the mixture is extruded in a molten state, disposed on a carrier film, and passed between rollers to be formed into a sheet shape.

In the forming operation, a temperature for melt extrusion of the mixture may be in a range of 150 to 300 °C. The sheet formed through the melt extrusion operation may be applied as the film described above.

The film according to the embodiments may be an extruded film. In the case of an extruded film, mass production is relatively easy, and formation of a laminated film further comprising other layers is possible. When manufactured as an extruded film, thickness control of the film is relatively easy, and compared to a casting manufacturing method, it is advantageous to manufacture a relatively thick film having overall well-controlled thickness. For example, the thickness of the extruded film may be 80 μm or more, 90 μm or more, or 100 μm or more.

The film according to the embodiments may be a film further comprising a plasticizer. The plasticizer may enable adjustment of a modulus of the film. Specifically, a film comprising a plasticizer may have a reduced modulus, which may improve workability of the surface protection film.

Hereinafter, the embodiments will be described in more detail through specific examples. The following examples are merely provided to aid understanding of the present invention, and the scope of the present invention is not limited thereto.

Manufacturing Example: Preparation of Film

A polyether block amide copolymer resin was applied as the first polymer resin. Specifically, PEBAX® 40R53 or PEBAX® 35R53 was applied. PEBAX® 40R53 is a polyether block amide resin commercially manufactured by Arkema France, containing about 46 wt% of PA11 residues as amide residues and about 54 wt% of polytetramethylene glycol residues, and is abbreviated as 40R53. PEBAX® 35R53 is a polyether block amide resin commercially manufactured by Arkema France, containing about 31 wt% of PA11 residues as amide residues and about 69 wt% of polytetramethylene glycol residues, and is abbreviated as 35R53.

A polyvinyl acetal resin composition was applied as the second polymer resin. Specifically, a polyvinyl butyral resin (PVB) obtained by a conventional process using polyvinyl alcohol having a degree of polymerization of 1700 and a degree of saponification of 99, and n-butyl aldehyde, was applied. The polyvinyl butyral resin had a hydroxyl group content of 20.3 wt%, a butyral group content of 78.9 wt%, and an acetyl group content of 0.8 wt%, and is abbreviated as PVB.

As a plasticizer, triethylene glycol bis(2-ethylhexanoate) was applied and abbreviated as 3G8.

The contents shown in Table 1 below were applied, and the composition was mixed using an extruder to prepare a mixture. The mixture was melt-extruded using an extruder owned by SK Microworks Co., Ltd. to manufacture the mixture in a sheet form, and the resulting sheet was applied as the film of the Examples.

For Comparative Examples, a film was formed by applying the polyether block amide copolymer resin alone (Comparative Example 1), or a commercially available TPU was applied (Comparative Example 2). As the TPU, product No. 49510 manufactured by Argotec was applied.

[Table 1]

| Content (parts by weight) | Example 1 | Example 2 | Example 3 | Example 4 | Example 5 | Example 6 | Comparative Example 1 |
|---|---|---|---|---|---|---|---|
| First polymer resin (40R53) | 70 | 70 | 70 | - | - | - | 100 |
| First polymer resin (35R53) | - | - | - | 70 | 70 | 70 | - |
| Second polymer resin (PVB) | 21.6 | 25.8 | 30 | 21.6 | 25.8 | 30 | - |
| Plasticizer (3G8) | 8.4 | 4.2 | 0 | 8.4 | 4.2 | 0 | - |

Experimental Example: Evaluation of Properties

Stress-strain curves were measured using a universal testing machine manufactured by Instron, or the like. The results are shown in Table 2.

[Table 2]

| | Stress (N/mm$^2$) | | | | | | | |
|---|---|---|---|---|---|---|---|---|
| | Example 1 | Example 2 | Example 3 | Example 4 | Example 5 | Example 6 | Comparative Example 1 | Comparative Example 2 |
| Stress at 10% strain | 3.0 | 3.4 | 4.2 | 1.6 | 1.6 | 1.8 | 5.1 | 3.1 |
| Stress at 20% strain | 4.7 | 5.1 | 6.1 | 2.6 | 2.7 | 3.0 | 7.2 | 4.4 |
| Stress at 50% strain | 6.5 | 6.9 | 8.0 | 4.0 | 4.1 | 4.5 | 8.4 | 7.2 |
| Stress at 100% strain | 6.7 | 7.1 | 8.4 | 4.4 | 4.6 | 5.1 | 8.3 | 10.7 |
| Stress at 200% strain | 7.7 | 8.7 | 10.3 | 4.9 | 5.3 | 6.2 | 9.2 | 17.0 |
| Stress at 300% strain | 10.1 | 11.7 | 14.6 | 6.3 | 6.9 | 8.7 | 11.2 | 25.5 |
| Difference between stress at 100% strain and stress at 20% strain (N/mm$^2$) | 2 | 2 | 2.3 | 1.8 | 1.9 | 2.1 | 1.1 | 6.3 |

(continued)

| | Stress (N/mm$^2$) | | | | | | | |
| --- | --- | --- | --- | --- | --- | --- | --- | --- |
| | Example 1 | Example 2 | Example 3 | Example 4 | Example 5 | Example 6 | Comparative Example 1 | Comparative Example 2 |
| Ratio of stress at 20% strain to stress at 100% strain | 0.7 | 0.72 | 0.73 | 0.59 | 0.59 | 0.59 | 0.87 | 0.41 |
| Ratio of stress at 300% strain to stress at 100% strain | 1.51 | 1.65 | 1.74 | 1.43 | 1.5 | 1.71 | 1.35 | 2.38 |

The tensile recovery rate evaluation was conducted using a sample of Example 2.

A film sample having a length of 60 mm to 100 mm was prepared, and a length of 50 mm was marked. Thereafter, tension was applied to elongate the film by applying the elongation rates shown in Table 3. That is, the film sample was elongated by applying tension until the length of the film reached LfN and was maintained for 10 seconds. Thereafter, the tension applied to the elongated film was removed, and the film was left at room temperature for 5 minutes. After the standing period, the marked length of the film was measured, and the measured length was defined as LiN, which is the recovered length of the elongated film. The tensile recovery rate was calculated according to Equation 1 below.

[Equation 1]

$$\text{Tensile recovery rate (\%)} = (LfN - LiN) / (LfN - Li)$$

In Equation 1, LfN is a length of the film elongated to an N% elongation, LiN is a length of the film after recovery from the elongated state, and Li is a length of the film before elongation.

[Table 3]

| | Length after elongation (mm) | Elongated length (mm) | Elongation (%) | Length after recovery (mm) | Recovered length (mm) | Tensile recovery rate (%) | Tensile recovery rate reduction coefficient (20-40) | Tensile recovery rate reduction coefficient (40-60) |
| --- | --- | --- | --- | --- | --- | --- | --- | --- |
| Comparative Example 1 | 60 | 10 | 20 | 50.5 | 9.5 | 95 | 0.25 | 0.5 |
| | 70 | 20 | 40 | 52 | 18 | 90 | | |
| | 80 | 30 | 60 | 56 | 24 | 80 | | |
| | 90 | 40 | 80 | 58 | 32 | 80 | | |
| | 100 | 50 | 100 | 64 | 36 | 72 | | |

(continued)

| | Length after elongation (mm) | Elongated length (mm) | Elongation (%) | Length after recovery (mm) | Recovered length (mm) | Tensile recovery rate (%) | Tensile recovery rate reduction coefficient (20-40) | Tensile recovery rate reduction coefficient (40-60) |
|---|---|---|---|---|---|---|---|---|
| Example 2 | 60 | 10 | 20 | 50.3 | 9.7 | 97 | 0.1 | 0.085 |
| | 70 | 20 | 40 | 51 | 19 | 95 | | |
| | 80 | 30 | 60 | 52 | 28 | 93.3 | | |
| | 90 | 40 | 80 | 54 | 36 | 90 | | |
| | 100 | 50 | 100 | 58 | 42 | 84 | | |
| Comparative Example 2 | 60 | 10 | 20 | 50 | 10 | 100 | 0.125 | 0.01 |
| | 70 | 20 | 40 | 50.5 | 19.5 | 97.5 | | |
| | 80 | 30 | 60 | 50.7 | 29.3 | 97.7 | | |
| | 90 | 40 | 80 | 51.3 | 38.7 | 96.8 | | |
| | 100 | 50 | 100 | 51.6 | 48.4 | 96.8 | | |

Referring to Tables 1 to 3 and comparing physical properties with a TPU that has conventionally been applied as a surface protection film, it was confirmed that, in the case of Examples 1, 2, 4, and 5 comprising a plasticizer, lower stress was exhibited at low strain levels such as 10% and 20%, thereby improving workability.

In addition, referring to Examples 1 and 2 and Comparative Example 1, it was confirmed that stress at high strain levels was similar to that of the case in which the first polymer resin was applied alone, while stress at low strain levels was reduced, thereby improving workability.

Further, referring to the results of Comparative Example 1 and Examples 1 to 6, it was confirmed that by mixing the second polymer resin, stress was slightly reduced in a low strain range while stress was increased in a high strain range, thereby achieving an effect of simultaneously improving workability and strength so as to be suitable for use as a surface protection film by mixing the first polymer resin and the second polymer resin.

Although the preferred embodiments of the present invention have been described in detail above, the scope of the present invention is not limited thereto, and various modifications and improvements made by those skilled in the art using the basic concept of the present invention as defined in the following claims also fall within the scope of the present invention.

## Claims

1.  A film comprising:

a first polymer resin and a second polymer resin that are heterogeneous from each other;
wherein the first polymer resin comprises polyamide-based repeating units and polyether-based repeating units,
wherein the second polymer resin comprises, in a branch, any one selected from the group consisting of a hydroxyl group, an acetal group, and combinations thereof,
wherein a tensile recovery rate at an N% elongation is derived according to Equation 1 below, and
wherein, when the N% is 60%, the tensile recovery rate of the film is 90% or more:

[Equation 1]

$$\text{Tensile recovery rate } (\%) = (LfN - LiN) / (LfN - Li)$$

wherein, in Equation 1,
LfN is a length of the film elongated to an N% elongation,
LiN is a length of the film after recovery from the elongated state, and

Li is a length of the film before elongation.

2. The film of claim 1,
   wherein a stress is 1 N/mm$^2$ or less when a strain is 100%.

3. The film of claim 1,
   wherein a haze value of the film is 3% or less after being left at 60 °C for 7 days.

4. The film of claim 1,
   wherein, when the N% is 100%, the tensile recovery rate of the film is 75% or more.

5. The film of claim 1,
   wherein the polyether-based repeating units are comprised in an amount of 10 wt% or more based on a total sum of the first polymer resin and the second polymer resin.

6. The film of claim 1,

   wherein a tensile recovery rate reduction coefficient (20-40) between a 20% elongation and a 40% elongation is derived according to Equation 2 below, and
   wherein the tensile recovery rate reduction coefficient (20-40) of the film is 0.3 or less:

   [Equation 2]

   $$\text{Tensile recovery rate reduction coefficient } (20\text{–}40) = \left| \frac{(A_{40} - A_{20})}{(40-20)} \right|$$

   wherein, in Equation 2,
   $A_{20}$ is a tensile recovery rate (%) of the film at a 20% elongation, and
   $A_{40}$ is a tensile recovery rate (%) of the film at a 40% elongation.

7. A film comprising:

   a polyether block amide copolymer resin; and
   a polyvinyl acetal resin,
   wherein a stress is 7 N/mm$^2$ or less when a strain is 20%.

8. The film of claim 7,
   wherein a value obtained by subtracting a stress at a strain of 20% from a stress at a strain of 100% is 5 N/mm$^2$ or less.

9. The film of claim 7,
   wherein a ratio of a stress at a strain of 300% to a stress at a strain of 100% is 1.4 or more.

10. The film of claim 1 or claim 7,
    wherein the film is a paint protection film.

**INTERNATIONAL SEARCH REPORT**

| International application No. |
| --- |
| **PCT/KR2024/005964** |

| A. | CLASSIFICATION OF SUBJECT MATTER |
| --- | --- |

**C08J 5/18**(2006.01)i; **C08L 77/00**(2006.01)i; **C08L 71/00**(2006.01)i; **C08L 29/14**(2006.01)i; **C08L 29/04**(2006.01)i; **C08J 7/04**(2006.01)i

According to International Patent Classification (IPC) or to both national classification and IPC

| B. | FIELDS SEARCHED |
| --- | --- |

Minimum documentation searched (classification system followed by classification symbols)

C08J 5/18(2006.01); B29D 7/01(2006.01); B32B 27/08(2006.01); B32B 27/34(2006.01); C08G 69/26(2006.01); C08J 5/00(2006.01); C08L 29/04(2006.01); C08L 53/02(2006.01); C08L 77/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 필름(film), 폴리비닐알코올(polyvinyl alcohol), 폴리비닐아세탈(polyvinyl acetal), 열가소성 탄성중합체(thermoplastic elastomer)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2016-183240 A (NIPPON SYNTHETIC CHEM. IND. CO., LTD.) 20 October 2016 (2016-10-20) <br> See claims 1-8; and paragraphs [0006], [0015], [0018]-[0023], [0046] and [0058]. | 1-6 |
| Y | | 7-10 |
| Y | KR 10-2010-0099308 A (KURARAY CO., LTD.) 10 September 2010 (2010-09-10) <br> See abstract; claims 1-11; and paragraphs [0002], [0007], [0060]-[0061], [0085] and [0101]-[0106]. | 7-10 |
| A | KR 10-1752027 B1 (KURARAY CO., LTD.) 28 June 2017 (2017-06-28) <br> See entire document. | 1-10 |
| A | JP 2022-542485 A (3M INNOVATIVE PROPERTIES COMPANY) 03 October 2022 (2022-10-03) <br> See entire document. | 1-10 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 August 2024** | **07 August 2024** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/005964** |

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2286935 B1 (SKC CO., LTD. et al.) 06 August 2021 (2021-08-06)<br>See entire document. | 1-10 |

Form PCT/ISA/210 (second sheet) (July 2022)

**INTERNATIONAL SEARCH REPORT**
Information on patent family members

International application No.

**PCT/KR2024/005964**

| Patent document cited in search report | | | Publication date (day/month/year) | Patent family member(s) | | | Publication date (day/month/year) |
|---|---|---|---|---|---|---|---|
| JP | 2016-183240 | A | 20 October 2016 | None | | | |
| KR | 10-2010-0099308 | A | 10 September 2010 | JP | 2011-081877 | A1 | 06 May 2011 |
| | | | | JP | 5567834 | B2 | 06 August 2014 |
| | | | | KR | 10-1571655 | B1 | 25 November 2015 |
| | | | | US | 10385202 | B2 | 20 August 2019 |
| | | | | US | 2010-0273012 | A1 | 28 October 2010 |
| | | | | WO | 2009-081877 | A1 | 02 July 2009 |
| KR | 10-1752027 | B1 | 28 June 2017 | CN | 102834439 | A | 19 December 2012 |
| | | | | CN | 102834439 | B | 23 March 2016 |
| | | | | JP | 2013-132592 | A1 | 18 July 2013 |
| | | | | JP | 5638533 | B2 | 10 December 2014 |
| | | | | KR | 10-2013-0051934 | A | 21 May 2013 |
| | | | | WO | 2011-132592 | A1 | 27 October 2011 |
| JP | 2022-542485 | A | 03 October 2022 | CN | 114502376 | A | 13 May 2022 |
| | | | | EP | 4034380 | A1 | 03 August 2022 |
| | | | | EP | 4034380 | B1 | 05 July 2023 |
| | | | | JP | 7270108 | B2 | 09 May 2023 |
| | | | | US | 11731408 | B2 | 22 August 2023 |
| | | | | US | 2022-0347982 | A1 | 03 November 2022 |
| | | | | WO | 2021-059101 | A1 | 01 April 2021 |
| KR | 10-2286935 | B1 | 06 August 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230129043
- KR 1020230129042
- KR 1020120022141